# DEMANDE DE BREVET EUROPEEN

(11) **EP 4 606 279 A1**
(43) Date de publication de la demande: **27.08.2025**
(21) Numéro de dépôt: 25155913.4
(22) Date de dépôt: 05.02.2025
(51) Int. Cl.: A47J 31/44

(54) **DISPOSITIF DE MOUSSAGE DE LAIT ET MACHINE DE DISTRIBUTION DE BOISSON ASSOCIEE**

(30) Priorité: 21.02.2024 FR 2401718
(71) Demandeur: SEB S.A., 69130 Ecully (FR)
(72) Inventeur: DUTERTRE, Thierry, 69134 ECULLY CEDEX (FR); VAUGEOIS, Sylvain, 69134 ECULLY CEDEX (FR)
(74) Mandataire: SEB Développement

(57) **Abrégé**

Ce dispositif de moussage de lait (30) comporte un réservoir (32) et un élément de mélange (34) propre à être fixé de manière amovible au réservoir (32) et comprenant un système de fixation (70) au réservoir. Le système de fixation (70) comprend un premier organe de verrouillage (102) mobile entre une position de verrouillage et une position de déverrouillage. Conformément à l'invention, le système de fixation (70) comprend également au moins un organe de verrouillage additionnel (106) propre à coopérer avec un logement de fixation additionnel (46, 48) respectif formé sur le réservoir (32).

## Description

### Domaine technique

La présente invention se rapporte au domaine des machines de distribution de boisson et notamment des machines à café de préférence automatiques. Plus particulièrement, la présente invention concerne le domaine des dispositifs de moussage de lait destinés à coopérer avec des machines de distribution de boisson telles des machines à café. De tels dispositifs de moussage permettent notamment lorsqu'ils sont associés à une machine à café de réaliser des boissons à base de café et de mousse de lait.

### Etat de la technique

Le document CN210989735 U divulgue un dispositif de moussage de lait sous la forme d'un pot à lait comprenant un réservoir à lait et un élément de mélange propre à être fixé au réservoir. Dans CN210989735 U l'élément de mélange comprend un système de fixation de l'élément de mélange au réservoir sous la forme d'un organe de verrouillage mobile propre à coopérer avec un logement correspondant formé sur le réservoir.

Cependant, le dispositif de moussage selon CN210989735 U reste complexe et son ergonomie, sa robustesse, sa nettoyabilité et sa démontabilité restent à améliorer.

### Résumé de l'invention

La présente invention vise à remédier à ces inconvénients.

Le problème technique à la base de l'invention consiste à proposer un dispositif de moussage de lait simplifié dont la robustesse, l'usage et la démontabilité sont améliorés.

A cet effet, l'invention a pour objet un dispositif de moussage de lait comportant un réservoir de lait comprenant une ouverture, et un élément de mélange, l'élément de mélange étant propre à être fixé de manière amovible au réservoir au niveau de l'ouverture et comprenant un système de fixation au réservoir, le système de fixation comprenant un premier organe de verrouillage mobile entre une position de verrouillage, dans laquelle le premier organe de verrouillage est propre à être reçu dans un premier logement de fixation formé sur le réservoir, et une position de déverrouillage dans laquelle le premier organe de verrouillage est propre à être extrait du premier logement de fixation. Conformément à l'invention, le système de fixation comprend également au moins un organe de verrouillage additionnel propre à coopérer avec un logement de fixation additionnel respectif formé sur le réservoir.

Grâce à l'invention, la manipulation de l'élément de mélange est facilitée et sa fixation au réservoir est améliorée. En effet, l'organe de verrouillage additionnel permet d'améliorer la fixation de l'élément de mélange au réservoir de manière simple et ainsi de garantir des bonnes performances de moussage et de robustifier le dispositif de moussage. De plus, le premier organe de verrouillage et chaque organe de verrouillage additionnel permettent de simplement fixer/séparer l'élément de mélange du réservoir pour une démontabilité et un usage améliorés. Le fait de simplifier la séparation de l'élément de mélange et du réservoir permet notamment un nettoyage aisé de ces composants par l'utilisateur.

Selon des aspects avantageux mais non obligatoires de l'invention, un tel dispositif de moussage peut incorporer une ou plusieurs des caractéristiques suivantes, prises dans toute combinaison techniquement admissible

Selon une caractéristique avantageuse de l'invention, lors du déplacement du premier organe de verrouillage entre les positions de verrouillage et de déverrouillage, le premier organe de verrouillage est mobile par rapport à chaque organe de verrouillage additionnel.

Selon une caractéristique avantageuse de l'invention, le réservoir s'étend sensiblement selon un axe central qui est sensiblement vertical en situation d'usage du dispositif de moussage de lait, et le déplacement du premier organe de verrouillage de la position de verrouillage vers la position de déverrouillage s'effectue selon une direction de déplacement, sensiblement perpendiculaire à l'axe central, s'étendant du premier organe de verrouillage vers chaque organe de verrouillage additionnel de sorte à réduire la distance entre le premier organe de verrouillage et chaque organe de verrouillage additionnel.

Selon une caractéristique avantageuse de l'invention, chaque organe de verrouillage additionnel est associé mécaniquement au premier organe de verrouillage de sorte que le déplacement du premier organe de verrouillage entre les positions de verrouillage et de déverrouillage entraine un déplacement correspondant de chaque organe de verrouillage additionnel entre une position de verrouillage dans laquelle l'organe de verrouillage additionnel est propre à être reçu dans le logement de fixation additionnel respectif, et une position de déverrouillage dans laquelle l'organe de verrouillage additionnel est propre à être extrait du logement de fixation additionnel respectif.

Un tel agencement permet une manipulation aisé du système de fixation et ainsi de facilement séparé l'élément de mélange du réservoir tout en ayant un système de fixation fiable et robuste garantissant la sécurité de l'utilisateur et des bonnes performances de moussage de lait.

Selon une caractéristique avantageuse de l'invention, le système de fixation comprend pour chaque organe de verrouillage additionnel un bras mobile en rotation par rapport au premier organe de verrouillage lors de son déplacement entre les positions de verrouillage et de déverrouillage, chaque bras étant propre lors de sa rotation à entrainer en translation l'organe de verrouillage additionnel correspondant pour le déplacer entre la position de verrouillage et la position de déverrouillage.

Un tel agencement permet une transmission efficace du mouvement du premier organe de verrouillage vers chaque organe de verrouillage additionnel et ainsi de faciliter la manipulation du système de fixation et la séparation de l'élément de mélange par rapport au réservoir.

Selon une caractéristique avantageuse de l'invention, le déplacement du premier organe de verrouillage de la position de verrouillage vers la position de déverrouillage s'effectue selon une direction de déplacement s'étendant du premier organe de verrouillage vers les organes de verrouillages additionnels de sorte à réduire la distance entre le premier organe de verrouillage et chaque organe de verrouillage additionnel et lors du déplacement du premier organe de verrouillage de la position de verrouillage vers la position de déverrouillage chaque bras est propre à déplacer l'organe de verrouillage additionnel correspondant en direction du premier organe de verrouillage.

Un tel agencement permet de disposer d'un système de fixation compact et robuste.

Selon une caractéristique avantageuse de l'invention, chaque bras comprend une première liaison pivot avec le premier organe de verrouillage et une deuxième liaison pivot avec l'organe de verrouillage additionnel correspondant, la première et la deuxième liaisons pivots étant positionnées à des extrémités opposées du bras correspondant.

Un tel agencement permet une transmission efficace du mouvement du premier organe de verrouillage à chaque organe de verrouillage additionnel.

Selon une caractéristique avantageuse de l'invention, pour chaque bras la première et la deuxième liaisons pivots définissent respectivement un premier et un deuxième axes de rotation sensiblement parallèles et s'étendant selon une direction sensiblement verticale.

Un tel agencement permet de disposer d'un système de fixation compact et robuste.

Selon une caractéristique avantageuse de l'invention, l'élément de mélange comprend un corps principal et chaque bras comprend une liaison pivot additionnelle avec le corps principal, la liaison pivot additionnelle étant positionnée entre la première et la deuxième liaisons pivots.

Un tel agencement permet d'assurer la fixation du système de fixation au corps principal et donc à l'élément de mélange.

Selon une caractéristique avantageuse de l'invention, l'élément de mélange comprend un corps principal et le corps principal comprend pour chaque organe de verrouillage additionnel un relief additionnel propre à former une liaison glissière avec l'organe de verrouillage additionnel.

Un tel agencement permet de favoriser le déplacement de chaque élément de verrouillage additionnel entre les positions de verrouillage et de déverrouillage et d'assurer la fixation du système de fixation au corps principal et donc à l'élément de mélange.

Selon une caractéristique avantageuse de l'invention, le premier organe de verrouillage définit une surface d'appui sur laquelle un effort est propre à être exercé pour déplacer le premier organe de verrouillage de sa position de verrouillage vers sa position de déverrouillage.

Un tel agencement permet une manipulation aisée du système de fixation et donc une séparation aisée de l'élément de mélange par rapport au réservoir.

Selon une caractéristique avantageuse de l'invention, un organe de rappel en position de verrouillage est associé au premier organe de verrouillage.

Un tel agencement permet de garantir le maintien du système de fixation et donc du premier organe de verrouillage mais aussi de chaque organe de verrouillage additionnel en position de verrouillage lorsqu'aucun effort n'est appliqué sur le système de fixation. La position de verrouillage est ainsi la position de repos du système de fixation.

Selon une caractéristique avantageuse de l'invention, le premier organe de verrouillage est muni d'un bord incliné formant un chanfrein propre à coopérer avec un bord supérieur de l'ouverture lors du montage de l'élément de mélange sur le réservoir pour déplacer le premier organe de verrouillage vers la position de déverrouillage.

Un tel agencement simplifie le montage de l'élément de mélange sur le réservoir.

Selon une caractéristique avantageuse de l'invention, chaque organe de verrouillage additionnel est muni d'un bord incliné formant un chanfrein propre à coopérer avec un bord supérieur de l'ouverture lors du montage de l'élément de mélange sur le réservoir pour déplacer chaque organe de verrouillage additionnel vers la position de déverrouillage.

Un tel agencement simplifie le montage de l'élément de mélange sur le réservoir.

Selon une caractéristique avantageuse de l'invention, l'élément de mélange comprend une partie de mélange ; et un orifice d'entrée d'eau chaude/vapeur et un conduit d'écoulement principal reliant l'orifice d'entrée d'eau chaude/vapeur à la partie de mélange.

Un tel agencement permet d'obtenir du lait moussé à l'aide du dispositif de moussage.

Selon une caractéristique avantageuse de l'invention, l'élément de mélange comprend un corps principal comprenant la partie de mélange, l'orifice d'entrée d'eau chaude/vapeur, le conduit d'écoulement principal et un conduit d'amenée de lait relié au conduit d'écoulement principal, et un organe de recouvrement du corps principal mobile par rapport au corps principal entre une position de fermeture dans laquelle l'organe de recouvrement ferme et/ou recouvre la partie de mélange et le conduit d'écoulement principal et une position d'ouverture dans laquelle la partie de mélange et le conduit d'écoulement principal sont ouverts et accessibles pour autoriser un nettoyage de la partie de mélange et du conduit d'écoulement principal.

Un tel agencement permet de faciliter le nettoyage de l'élément de mélange et d'obtenir du lait moussé à partir du dispositif de moussage.

L'invention a également pour objet une machine de distribution de boisson comprenant un embout de sortie d'eau chaude/vapeur et un dispositif de moussage de lait propre à être connecté à l'embout de sortie d'eau chaude/vapeur. Conformément à l'invention, le dispositif de moussage de lait est tel que décrit ci-dessus.

Un tel agencement permet d'obtenir à partir de la machine de distribution de boisson, des boissons à base de lait moussé de manière simple avec une robustesse et un usage améliorés. En effet le dispositif de moussage est facilement montable/démontable grâce au système de fixation et celui-ci assure une fixation optimale de l'élément de mélange au réservoir de sorte que la fiabilité du dispositif de moussage est améliorée.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une représentation très schématique d'une machine de distribution de boisson équipée d'un dispositif de moussage de lait conforme à un mode de réalisation de l'invention ;
La figure 2 est une vue en perspective du dispositif de moussage de la figure 1 comprenant un réservoir de lait et un élément de mélange dont le système de fixation au réservoir est en position de verrouillage ;
La figure 3 est une vue analogue à la figure 2 selon un autre point de vue ;
La figure 4 est une vue analogue à la figure 2, le système de fixation étant en position de déverrouillage ;
La figure 5 est une vue en éclaté du dispositif de moussage de la figure 2 ;
La figure 6 est une vue en perspective du système de fixation de la figure 2 en position de verrouillage ;
La figure 7 est une vue en perspective du système de fixation de la figure 4 en position de déverrouillage.

Seuls les éléments nécessaires à la compréhension de l'invention ont été représentés. Pour faciliter la lecture des dessins, les mêmes éléments portent les mêmes références d'une figure à l'autre.

### Description détaillée de l'invention

Dans la suite de la description on entend par mousse ou moussage le fait d'obtenir à partir d'un liquide une mousse que ce soit seulement de la mousse de ce liquide (i.e. de la mousse de lait) ou un mélange de ce liquide et de mousse de ce liquide (i.e. un mélange de lait et de mousse de lait).

On notera que dans ce document, les termes « horizontal », « vertical », « inférieur », « supérieur », « haut », « bas », « avant », « arrière », « longitudinal », « transversal », employés pour décrire la machine de distribution de boisson et les éléments associés à celle-ci font référence à la machine de distribution de boisson et aux éléments associés en situation d'usage, lorsque la machine repose à plat sur un plan de travail.

De plus les termes « amont » et « aval » ou « entrée » et « sortie » sont définis en fonction d'un sens de circulation de la boisson ou de la vapeur dans la machine de distribution de boisson et dans le dispositif de moussage de lait.

Les termes « externe » et « interne » de même que les termes « extérieur » et « intérieur » sont définis par rapport à un axe central de la machine de distribution de boisson ou du dispositif de moussage de lait. Ainsi une portion/partie interne/intérieure sera plus proche de l'axe central qu'une portion/partie externe/extérieure.

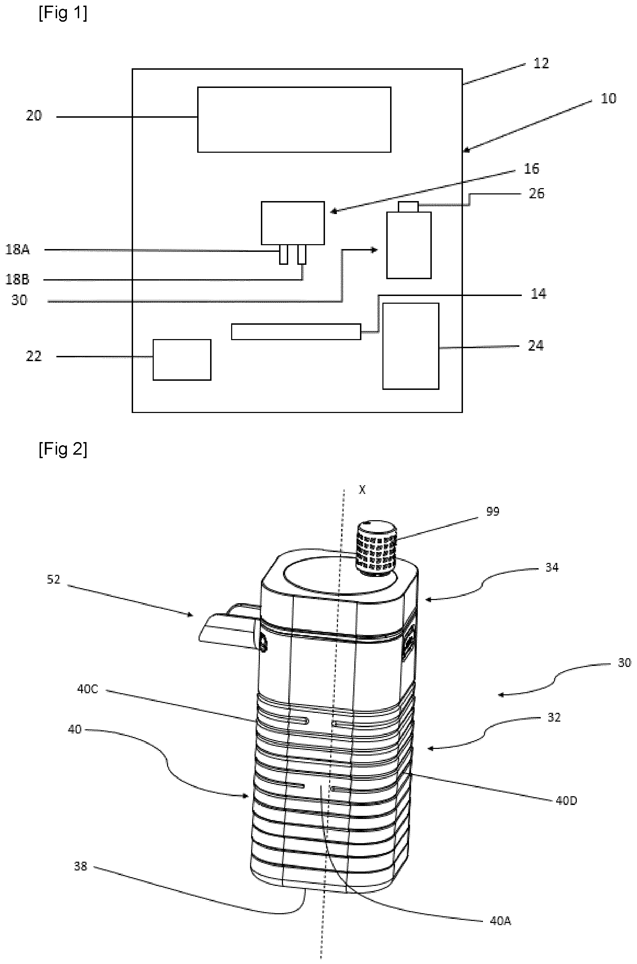

La machine de distribution de boisson représentée à la figure 1 est une machine à café 10. En variante, la machine de distribution de boisson est une machine de distribution d'eau chaude ou de thé.

La machine à café 10, représentée de manière très schématique à la figure 1, est avantageusement une machine à café 10 automatique.

La machine à café 10 comporte un bâti 12, un support de récipient 14 sur lequel un récipient peut être disposé et une tête de distribution de boisson 16. La tête de distribution de boisson 16 comporte au moins une buse, de préférence deux buses 18A, 18B, de sortie de café.

La machine à café 10 comporte un circuit de commande 20 pour gérer la réalisation d'une boisson à partir des instructions données par un utilisateur. La machine à café 10 comporte également une chaudière 22 produisant de l'eau chaude et/ou de la vapeur et un réservoir 24 formant une réserve en eau froide. Le réservoir 24 permet d'alimenter la chaudière 22 pour produire de l'eau chaude et/ou de la vapeur.

La machine à café 10 comprend également un embout de sortie d'eau chaude/vapeur 26 propre à être alimenté en eau chaude et/ou vapeur par la chaudière 22.

De manière connue et non représentée, la machine à café 10 comprend avantageusement un réservoir de grains de café, un moulin à grains automatique et une chambre d'infusion propre à recevoir les grains de café moulus et à être alimentée en eau chaude par la chaudière 22. La chambre d'infusion est reliée fluidiquement à la tête de distribution de boisson 16 de manière à ce que la machine à café 10 soit propre à distribuer une boisson à base de café au niveau des buses de sortie de café 18A, 18B.

Conformément à l'invention, la machine à café 10 comprend également un dispositif de moussage de lait 30 propre à être connecté à l'embout de sortie d'eau chaude/vapeur 26.

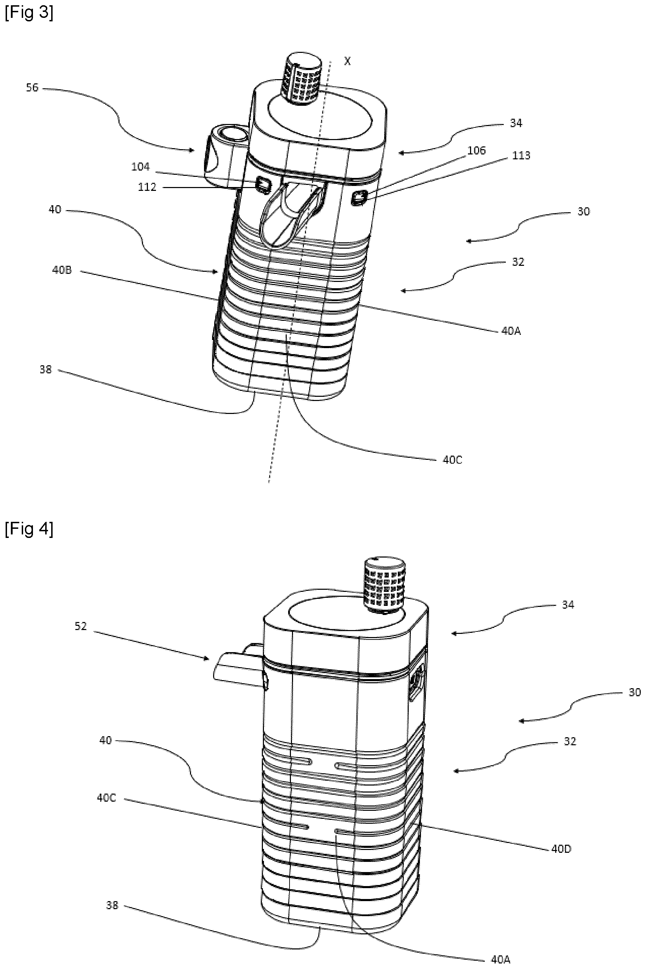

Comme représenté aux figures 2 à 5, le dispositif de moussage de lait 30 comprend un réservoir 32 de lait, un élément de mélange 34 propre à être fixé au réservoir 32 et un tube d'alimentation en lait 35 de l'élément de mélange 34 destiné à s'étendre entre le réservoir 32 et l'élément de mélange 34.

Le réservoir 32 est propre à recevoir du lait destiné à être moussé à l'aide de l'élément de mélange 34 qui forme un organe de moussage.

Le réservoir 32 délimite un volume interne destiné à contenir du lait et comprenant une ouverture 36, de préférence supérieure.

Le réservoir 32 a par exemple une forme globalement cylindrique et comprend un fond 38 et une paroi circonférentielle 40 s'étendant vers le haut depuis le fond 38. La paroi circonférentielle 40 définit par exemple une face avant, 40A, une face arrière 40B, un côté gauche 40C et un côté droit 40D.

Le réservoir 32 s'étend sensiblement selon un axe central X qui est sensiblement vertical en situation d'usage du dispositif de moussage de lait 30, notamment lorsque celui-ci est connecté à l'embout de sortie d'eau chaude/vapeur 26.

L'ouverture 36 est avantageusement une ouverture de remplissage du réservoir 32.

Le fond 38 et la paroi circonférentielle 40 définissent ensemble le volume interne.

Le réservoir 32 comprend un premier logement de fixation 42 de l'élément de mélange 34 au réservoir 32. Le premier logement de fixation 42 est formé sur la paroi circonférentielle 40.

Le réservoir comprend également deux logements de fixation additionnels 46, 48 de l'élément de mélange 34 au réservoir 32. A savoir, un premier logement de fixation additionnel 46 un deuxième logement de fixation additionnel 48.

En variante, le réservoir comprend un seul logement de fixation additionnel ou plus de deux logements de fixation additionnels.

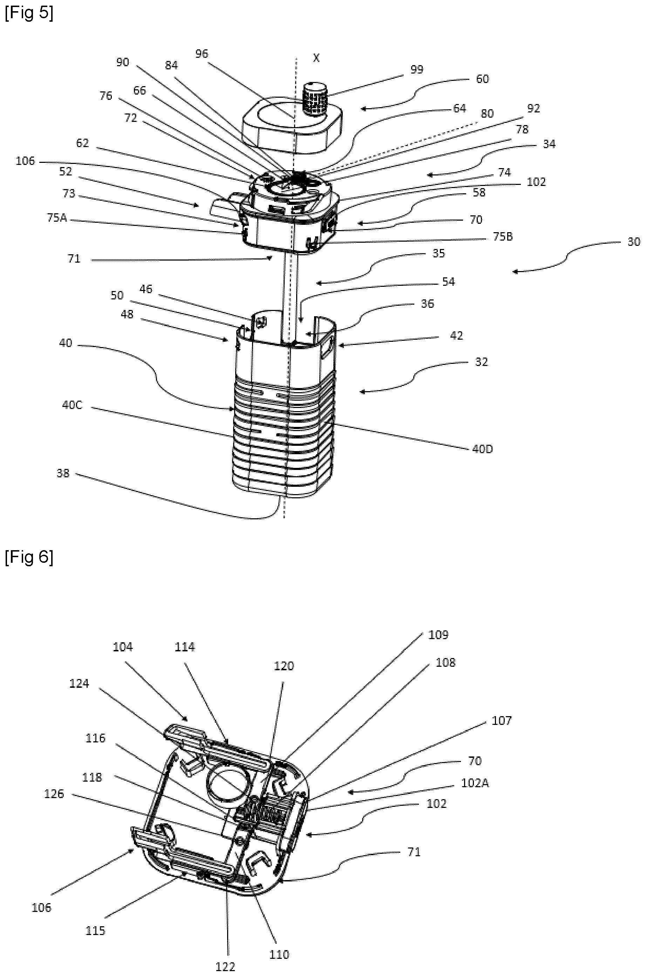

Avantageusement, comme représenté sur la figure 5, les logements de fixation additionnels 46, 48 sont positionnés en regard du premier logement de fixation 42. En d'autres termes, les logements de fixation additionnels 46, 48 d'une part et le premier logement de fixation 42 d'autre part sont disposés sur deux côtés opposées de la paroi circonférentielle 40. Les logements de fixation additionnels 46, 48 sont par exemple agencés sur le côté gauche 40C et le premier logement de fixation 42 est par exemple agencé sur le côté droit 40D.

Avantageusement, le premier logement de fixation 42 et les logements de fixation additionnels 46, 48 sont traversants selon une direction sensiblement radiale par rapport à l'axe central X.

Avantageusement, le réservoir 32 définit également un logement de réception 50 d'un organe de distribution de lait moussé 52, tel un bec verseur, agencé par exemple sur le côté gauche 40C entre les deux logements de fixation additionnels 46, 48.

Avantageusement encore, le réservoir 32 définit un logement de réception 54 d'un organe de connexion 56 réversible du dispositif de moussage de lait 30 à l'embout de sortie d'eau chaude/vapeur 26.

Le logement de réception 54 est visible sur la figure 5 et est par exemple formé sur la face arrière 40B.

L'élément de mélange 34 est agencé au niveau de l'ouverture 36.

L'élément de mélange 34 est propre à être fixé de manière amovible au réservoir 32 au niveau de l'ouverture 36 et avantageusement à venir fermer l'ouverture 36.

L'élément de mélange 34 forme un organe de moussage et comprend, comme représenté à la figure 5, un corps principal 58 et un organe de recouvrement 60 du corps principal 58.

Le corps principal s'étend selon un axe central correspondant à l'axe central X du réservoir lorsqu'il est fixé au réservoir 32. Dans la suite de la description et sur les dessins l'axe central du corps principal 58 est confondu avec l'axe central du réservoir 32.

Le corps principal 58 comprend une partie de mélange 62, un orifice d'entrée d'eau chaude/vapeur 64 et un conduit d'écoulement principal 66 reliant l'orifice d'entrée d'eau chaude/vapeur 64 à la partie de mélange 62.

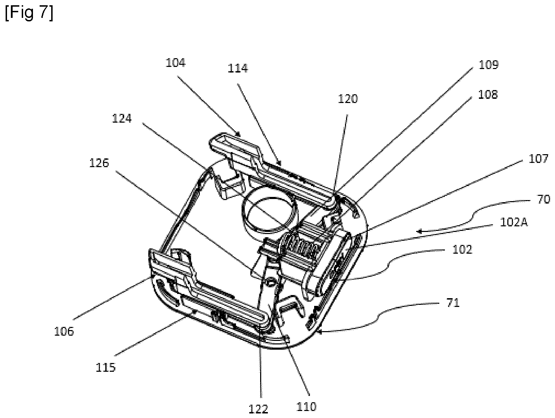

Le corps principal 58 comprend un système de fixation 70 réversible de l'élément de mélange 34 au réservoir 32 plus clairement visible aux figures 6 et 7.

Le corps principal 58 comprend avantageusement l'organe de distribution de lait moussé 52 qui est relié fluidiquement à la partie de mélange 62. L'organe de distribution de lait moussé 52 est destiné à être positionné dans le logement de réception 50.

Le corps principal 58 comprend également avantageusement l'organe de connexion 56 du dispositif de moussage de lait 30 à l'embout de sortie d'eau chaude/vapeur 26.

L'organe de connexion 56 débouche sur une face arrière du dispositif de moussage 30 et est notamment destiné à être reçu au niveau du logement de réception 54 formé sur la face arrière 40B du réservoir 32. Lors de l'association du dispositif de moussage 30 avec la machine à café 10, l'organe de connexion 56 est propre à être connecté à l'embout de sortie d'eau chaude/vapeur 26 de sorte à être alimenté en eau chaude/vapeur. L'organe de connexion 56 est configuré pour assurer la fixation/connexion du dispositif de moussage à la machine à café 10 et notamment à l'embout de sortie d'eau chaude/vapeur 26.

L'orifice d'entrée d'eau chaude/vapeur 64 est relié fluidiquement à l'organe de connexion 56 de manière à recevoir de l'eau chaude/vapeur délivrée par l'embout de sortie d'eau chaude/vapeur 26 lorsque l'organe de connexion 56 est connecté à l'embout de sortie d'eau chaude/vapeur 26.

Le corps principal 58 est destiné à venir recouvrir et notamment fermer l'ouverture 36 et comprend une paroi inférieure 71, une paroi supérieure 72 et une paroi circonférentielle 73.

Le corps principal 58 comprend notamment un épaulement 74 destiné à coopérer avec un bord d'une extrémité supérieure du réservoir 32 lorsque l'élément de mélange 34 est fixé au réservoir 32.

Avantageusement, le corps principal 58 comprend des organes d'appui 75A, 75B contre une face interne de la paroi circonférentielle 40 visibles à la figure 5. Les organes d'appui 75A, 75B sont propres à exercer un effort radial d'appui contre la face interne de la paroi circonférentielle 40 pour assurer un maintien additionnel du corps principal 58 et notamment de l'élément de mélange 34 sur le réservoir 32. Les organes d'appui 75A, 75B sont par exemple des languettes déformables élastiquement et agencées sur la paroi circonférentielle 73. Sur la figure 5 seulement deux organes d'appui 75A, 75B sont visibles. Avantageusement, le corps principal comprend quatre organes d'appui régulièrement répartis le long de la paroi circonférentielle 73.

La partie de mélange 62 comprend une ouverture d'entrée de liquide 76, une ouverture de sortie de liquide, non visible sur les figures et une chambre de mélange 78 s'étendant entre l'ouverture d'entrée de liquide 76 et l'ouverture de sortie de liquide.

La chambre de mélange 78 s'étend suivant une direction verticale parallèle à l'axe central X lorsque l'élément de mélange 34 est fixé au réservoir 32.

La chambre de mélange 78 comprend une extrémité supérieure ouverte 80. L'extrémité supérieure ouverte 80 forme une ouverture d'accès à la chambre de mélange 78.

La chambre de mélange 78 débouche dans une face supérieure de la paroi supérieure 72 du corps principal 58.

La chambre de mélange 78 est de section sensiblement circulaire perpendiculairement à la direction verticale.

L'ouverture d'entrée de liquide 76 débouche dans une partie supérieure de la chambre de mélange 78, et par exemple dans un point haut de la chambre de mélange 78 et l'ouverture de sortie de liquide est située dans une partie inférieure de la chambre de mélange 78, et est par exemple située en un point bas de la chambre de mélange 78.

L'extrémité supérieure ouverte 80 est disposée sur une face supérieure du corps principal 58 et donc de la paroi supérieure 72.

L'ouverture de sortie de liquide est reliée fluidiquement à l'organe de distribution de lait moussé 52 de sorte à ce que l'organe de distribution de lait moussé 52 soit propre à être alimenté en lait moussé via l'ouverture de sortie de liquide et à distribuer du lait moussé dans une tasse positionnée à l'aplomb de l'organe de distribution de lait moussé 52.

Le conduit d'écoulement principal 66 est ménagé dans la face supérieure de la paroi supérieure 72 et débouche dans la chambre de mélange 78 au niveau de l'ouverture d'entrée de liquide 76.

Le conduit d'écoulement principal 66 débouche sensiblement tangentiellement dans la chambre de mélange 78 de sorte que la chambre de mélange 78 soit de type cyclonique. Ainsi, le liquide débouchant dans la chambre de mélange 78 depuis le conduit d'écoulement principal 66, traverse la chambre de mélange en tourbillonnant le long des parois de la chambre de mélange 78.

Comme visible à la figure 5, le conduit d'écoulement principal 66 comporte une restriction de section 84 située par exemple dans une portion centrale du conduit d'écoulement principal 66. Le conduit d'écoulement principal 66 comprend notamment une première portion de conduit qui est située en amont de la restriction de section 84 et qui s'étend jusqu'à la restriction de section, et une deuxième portion de conduit qui est située en aval de la restriction de section 84 et qui s'étend depuis la restriction de section 84 et jusqu'à la chambre de mélange 78. De façon avantageuse, la première portion de conduit présente une section de passage qui diminue en direction de la restriction de section 84 et la deuxième portion de conduit présente une section de passage qui augmente en direction de la chambre de mélange 78.

L'orifice d'entrée d'eau chaude/vapeur 64 débouche dans la première portion de conduit et plus particulièrement à l'opposé de la chambre de mélange 78. Le conduit d'écoulement principal 66 est ainsi configuré pour relier fluidiquement l'orifice d'entrée d'eau chaude/vapeur 64 à la chambre de mélange 78, et pour permettre un écoulement d'eau chaude/vapeur dans le conduit d'écoulement principal 66 et jusqu'à la chambre de mélange 78.

Le corps principal 58 comprend également un conduit d'amenée de lait 90 relié au conduit d'écoulement principal 66. Lorsque l'élément de mélange 34 est fixé au réservoir, le conduit d'amenée de lait 90 s'étend entre le conduit d'écoulement principal 66 et le tube d'alimentation en lait 35 de sorte à être connecté fluidiquement au volume interne du réservoir 32.

Le conduit d'amenée de lait 90 est relié fluidiquement au conduit d'écoulement principal 66, et donc configuré pour être relié fluidiquement à la chambre de mélange 78 via le conduit d'écoulement principal 66.

Le conduit d'amenée de lait 90 comprend une portion sensiblement verticale qui s'étend, de préférence depuis le voisinage de la paroi inférieure 71 et débouche dans le conduit d'écoulement principal 66 au niveau de la restriction de section 84.

Sur la figure 5, seule la partie du conduit d'amenée de lait 90 qui débouche dans le conduit d'écoulement principal 66 est visible.

Le corps principal 58 comprend également un canal d'admission d'air 92 dans le conduit d'écoulement principal 66.

Avantageusement, le canal d'admission d'air 92 est ménagé dans la face supérieure de la paroi supérieure 72 du corps principal 58.

Le canal d'admission d'air 92 débouche dans le conduit d'écoulement principal 66 au niveau de la restriction de section 84. Le canal d'admission d'air 92 est ainsi configuré pour être relié fluidiquement à la chambre de mélange 78 via le conduit d'écoulement principal 66.

La restriction de section 84, décrite préalablement, induit une augmentation de la vitesse de la vapeur s'écoulant dans le conduit d'écoulement principal 66, ce qui génère une dépression dans le conduit d'amenée de lait 90 et dans le canal d'admission d'air 92. La restriction de section 84 est donc plus particulièrement configurée pour former un système d'aspiration de lait et d'air basé sur l'effet venturi. Le conduit d'écoulement principal 66 est ainsi configuré de telle sorte qu'un écoulement d'eau chaude/vapeur dans le conduit d'écoulement principal 66 depuis l'orifice d'entrée d'eau chaude/vapeur 64 et jusqu'à la chambre de mélange 78 génère une dépression dans le conduit d'amenée de lait 90 et une dépression dans le canal d'admission d'air 92 et entraîne par conséquent une aspiration de lait et d'air dans le conduit d'écoulement principal 66 et un écoulement du lait et de l'air aspirés jusqu'à la chambre de mélange 78.

De plus, la deuxième portion de conduit, qui présente une section de passage qui augmente en direction de la chambre de mélange 78, favorise un premier mélange de la vapeur, du lait et de l'air provenant respectivement de l'orifice d'entrée d'eau chaude/vapeur 64, du conduit d'amenée de lait 90 et du canal d'admission d'air 92, avant leur arrivée dans la chambre de mélange 78.

En outre, de par le positionnement du conduit d'écoulement principal 66 par rapport à la chambre de mélange 78, le premier mélange de vapeur, de lait et de l'air subit un mouvement cyclonique lors de son arrivée de la chambre de mélange et tourbillonne le long des parois de la chambre 78 ce qui favorise encore le mélange et l'obtention d'une mousse de lait de consistance optimale. Ainsi, la chambre de mélange 78 permet l'homogénéisation du premier mélange précité et permet de finaliser le mélange qui a commencé dans la deuxième portion de conduit.

Le conduit d'écoulement principal 66, de même que l'orifice d'entrée d'eau chaude/vapeur 64, de même que le canal d'admission d'air 92 et la chambre de mélange 78 comprennent avantageusement une extrémité supérieure ouverte. En d'autres termes, ils forment des canaux de circulation de liquide ouverts sur l'extérieur dans leur partie haute.

L'organe de recouvrement 60 est destiné à venir recouvrir la face supérieure de la paroi supérieure 72.

L'organe de recouvrement 60 est mobile par rapport au corps principal 58 entre une position de fermeture dans laquelle l'organe de recouvrement 60 ferme et/ou recouvre la partie de mélange 62 et le conduit d'écoulement principal 66 et une position d'ouverture dans laquelle la partie de mélange 62 et le conduit d'écoulement principal 66 sont ouverts et accessibles pour autoriser un nettoyage de la partie de mélange 62 et du conduit d'écoulement principal 66.

Avantageusement, l'organe de recouvrement 60 est propre à être solidaire du corps principal 58 en position de fermeture et à être séparé du corps principal 58 en position d'ouverture.

L'organe de recouvrement 60 est propre à être fixé au corps principal 58 via un mécanisme de fixation par exemple de type baïonnette visible à la figure 5.

Dans la position de fermeture, l'organe de recouvrement 60 ferme et/ou recouvre notamment, l'extrémité supérieure ouverte de l'orifice d'entrée d'eau chaude/vapeur 64, du conduit d'écoulement principal 66 et de la chambre de mélange 78.

Avantageusement, dans la position de fermeture, l'organe de recouvrement 60 ferme et/ou recouvre également au moins partiellement le canal d'admission d'air 92 et notamment l'extrémité supérieure ouverte du canal d'admission d'air.

L'organe de recouvrement 60 permet d'assurer, d'une part, lorsqu'il est en position d'ouverture, l'accessibilité à l'orifice d'entrée d'eau chaude/vapeur 64, au conduit d'écoulement principal 66 à la chambre de mélange 78 et avantageusement au canal 92 pour leur nettoyage et d'autre part, lorsqu'il est en position de fermeture, l'étanchéité de l'orifice d'entrée d'eau chaude/vapeur 64, du conduit d'écoulement principal 66, de la chambre de mélange 78 et avantageusement du canal 92.

Avantageusement, l'organe de recouvrement 60 forme un couvercle sensiblement plan propre à recouvrir la face supérieure de la paroi supérieure 72 et notamment la partie de mélange 62 et le conduit d'écoulement principal 66.

L'organe de recouvrement 60 forme un couvercle du corps principal 58 et est destiné à être positionné au-dessus de l'ouverture 36 lorsque l'élément de mélange 34 est fixé au réservoir 32.

L'organe de recouvrement 60 comprend également une fenêtre de visualisation 96, destinée à être en regard de la paroi supérieure 72.

La fenêtre de visualisation 96 est notamment destiné à être en regard de la partie de mélange 62, notamment de la chambre de mélange 78, et avantageusement également du conduit d'écoulement principal 66 lorsque l'organe de recouvrement 60 est en position de fermeture.

La fenêtre de visualisation 96 est destinée à être en regard de l'extrémité supérieure ouverte 80 lorsque l'organe de recouvrement 60 est en position de fermeture.

La fenêtre de visualisation 96 est par exemple formée par une portion de l'organe de recouvrement 60 réalisée en un matériau transparent de sorte que l'utilisateur puisse visualiser l'intérieur de la chambre de mélange 78 et avantageusement le conduit d'écoulement principal 66 lorsque l'organe de recouvrement 60 est en position de fermeture.

La fenêtre de visualisation 96 permet à l'utilisateur de visualiser si le dispositif de moussage 30 a déjà été utilisé et s'il faut le nettoyer avant de réaliser une boisson. En outre, l'utilisateur peut vérifier le bon fonctionnement du dispositif de moussage 30 au travers de la fenêtre de visualisation en vérifiant visuellement si le lait traverse le conduit d'écoulement principal 66 et la chambre de mélange 78 et a bien un mouvement cyclonique le long des parois de la chambre 78.

L'organe de recouvrement 60 comprend également un conduit d'amenée d'air, non visible sur les figures, relié au canal d'admission d'air 92 lorsque l'organe de recouvrement 60 est en position de fermeture de sorte à être relié fluidiquement au conduit d'écoulement principal 66.

L'organe de recouvrement 60 comprend également un dispositif de réglage de débit d'air 99 configuré pour régler un débit d'air s'écoulant dans le conduit d'amenée d'air jusqu'au conduit d'écoulement principal 66.

Le conduit d'amenée d'air est par exemple un orifice traversant l'organe de recouvrement 60 selon la direction verticale lorsque l'organe de recouvrement 60 est en position de fermeture.

Le système de fixation 70 de l'élément de mélange 34 au réservoir 32 est représenté plus en détail aux figures 6 et 7. Les figures 6 et 7 représentent plus précisément la paroi inférieure 71 du corps principal sur la face interne de laquelle est positionné le système de fixation 70.

Le système de fixation 70 comprend un premier organe de verrouillage 102 destiné à coopérer avec le premier logement de fixation 42.

Le système de fixation 70 comprend également deux organes de verrouillage additionnels 104, 106 propres à coopérer respectivement avec le logement de fixation additionnel 46, 48 correspondant.

Le premier organe de verrouillage 102 et les organes de verrouillage additionnels 104, 106 forment des pênes propres à coopérer avec les logements de fixation 42, 46, 48 correspondants.

Le premier organe de verrouillage 102 est mobile entre une position de verrouillage, visible à la figure 6, dans laquelle le premier organe de verrouillage 102 est propre à être reçu dans le premier logement de fixation 42 formé sur le réservoir et une position de déverrouillage, visible à la figure 7, dans laquelle le premier organe de verrouillage 102 est propre à être extrait du premier logement de fixation 42.

En position de verrouillage, représentée à la figure 6, le premier organe de verrouillage 102 s'étend selon une direction radiale par rapport à l'axe central X en saillie du corps principal 58 et notamment de la paroi circonférentielle 73 du corps principal.

En position de déverrouillage, représentée à la figure 7, le premier organe de verrouillage 102 s'étend selon une direction radiale par rapport à l'axe central X sensiblement en retrait ou à l'aplomb du corps principal 58 et notamment de la paroi circonférentielle 73 du corps principal.

Le premier organe de verrouillage 102 est par exemple agencé au niveau d'une ouverture formée au travers de la paroi circonférentielle 73.

La position de verrouillage correspond à une position déployée et la position de déverrouillage à une position rétractée.

Le déplacement du premier organe de verrouillage 102 de la position de verrouillage vers la position de déverrouillage s'effectue selon une direction de déplacement, sensiblement perpendiculaire à l'axe central X, s'étendant du premier organe de verrouillage 102 vers les organes de verrouillages additionnels 104, 106 de sorte à réduire la distance entre le premier organe de verrouillage 102 et chaque organe de verrouillage additionnel 104, 106.

Le premier organe de verrouillage 102 définit une surface d'appui 102A sur laquelle un effort est propre à être exercé par un utilisateur pour déplacer le premier organe de verrouillage 102 de sa position de verrouillage vers sa position de déverrouillage.

Le premier organe de verrouillage 102 est muni d'un bord incliné formant un chanfrein 107 propre à coopérer avec un bord supérieur de l'ouverture 36 lors du montage de l'élément de mélange 34 sur le réservoir 32 pour déplacer le premier organe de verrouillage 102 vers la position de déverrouillage. La direction de montage est sensiblement verticale.

Avantageusement, le chanfrein 107 s'étend par exemple sur le pourtour du premier organe de verrouillage 102 et comprend une extrémité externe plus proche de l'axe central X qu'une extrémité interne. L'extrémité externe et l'extrémité interne sont définis par rapport à un centre du premier organe de verrouillage. Le chanfrein est alors également propre à coopérer avec un bord supérieur du premier logement de fixation 42 lors du démontage de l'élément de mélange 34 par rapport au réservoir 32 pour déplacer le premier organe de verrouillage 102 vers la position de déverrouillage. La direction de démontage est sensiblement verticale.

Ainsi le premier chanfrein 107 est propre à coopérer avec une face interne de la paroi circonférentielle 40 lors du montage mais aussi du démontage de l'élément de mélange 34 par rapport au réservoir 32 de sorte à ce que le premier organe de verrouillage 102 soit déplacé vers la position de déverrouillage lors de la translation du premier organe de verrouillage 102 le long de la paroi circonférentielle 40 lors des opérations de montage et de démontage.

En variante, le chanfrein 107 s'étend uniquement sur un côté inférieur du premier organe de verrouillage 102.

Le système de fixation 70 comprend avantageusement un organe de rappel 108 associé au premier organe de verrouillage 102. L'organe de rappel 108 est configuré pour rappeler le premier organe de verrouillage 102 en position de verrouillage. L'organe de rappel 108 est par exemple un ressort.

Lors du montage du corps principal 58 sur le réservoir 32, lorsque le premier organe de verrouillage 102 est placé en regard du premier logement de fixation 42, il vient se loger dans le premier logement de fixation 42 sous l'effet de l'effort de rappel exercé par l'organe de rappel 108.

Avantageusement, chaque organe de verrouillage additionnel 104, 106 est associé mécaniquement au premier organe de verrouillage 102 de sorte que le déplacement du premier organe de verrouillage 102 entre les positions de verrouillage et de déverrouillage entraine un déplacement correspondant de chaque organe de verrouillage additionnel 104, 106 entre une position de verrouillage dans laquelle l'organe de verrouillage additionnel 104, 106 est propre à être reçu dans le logement de fixation additionnel 46, 48 respectif, et une position de déverrouillage dans laquelle l'organe de verrouillage additionnel 104 , 106 est propre à être extrait du logement de fixation additionnel 46, 48 respectif.

Le système de fixation 70 comprend par exemple pour chaque organe de verrouillage additionnel 104, 106 un bras mobile 109, 110 en rotation par rapport au premier organe de verrouillage 102 lors de son déplacement entre les positions de verrouillage et de déverrouillage.

En position de verrouillage, chaque organe de verrouillage additionnel 104, 106 s'étend selon une direction radiale par rapport à l'axe central X en saillie du corps principal 58 et notamment de la paroi circonférentielle 73 du corps principal.

En position de déverrouillage, chaque organe de verrouillage additionnel 104, 106 s'étend selon une direction radiale par rapport à l'axe central sensiblement en retrait ou à l'aplomb du corps principal 58 et notamment de la paroi circonférentielle 73 du corps principal.

Chaque organe de verrouillage additionnel 104, 106 est par exemple agencé au niveau d'une ouverture correspondante formée au travers de la paroi circonférentielle 73.

La position de verrouillage correspond à une position déployée et la position de déverrouillage à une position rétractée.

Chaque organe de verrouillage additionnel 104, 106 est également muni d'un bord incliné formant un chanfrein 112, 113 propre à coopérer avec un bord supérieur de l'ouverture 36 lors du montage de l'élément de mélange 34 sur le réservoir 32 pour déplacer l'organe de verrouillage additionnel 104, 106 correspondant vers la position de déverrouillage.

Avantageusement, chaque chanfrein 112, 113 s'étend uniquement sur un côté inférieur de l'organe de verrouillage additionnel 104, 106 correspondant. Chaque chanfrein 112, 113 comprend une extrémité externe plus proche de l'axe central X qu'une extrémité interne. L'extrémité externe et l'extrémité interne sont définis par rapport à un centre de l'organe de verrouillage additionnel 104, 106 correspondant.

Chaque bras 109, 110 est propre lors de sa rotation à entrainer en translation l'organe de verrouillage additionnel 104, 106 correspondant pour le déplacer entre la position de verrouillage et la position de déverrouillage.

Avantageusement, le corps principal 58 comprend pour chaque organe de verrouillage additionnel 104, 106 un relief additionnel 114, 115 propre à former une liaison glissière avec l'organe de verrouillage additionnel 104, 106.

Lors du déplacement du premier organe de verrouillage 102 de la position de verrouillage vers la position de déverrouillage, chaque bras 109, 110 est propre à déplacer l'organe de verrouillage additionnel 104, 106 correspondant en direction du premier organe de verrouillage 102.

Lors du déplacement du premier organe de verrouillage 102 de la position de déverrouillage vers la position de verrouillage, sous l'effet notamment de l'organe de rappel 108, chaque bras 109, 110 est propre à déplacer l'organe de verrouillage additionnel 104, 106 correspondant à l'opposé du premier organe de verrouillage 102.

Chaque bras 109, 110 comprend une première liaison pivot 116, 118 avec le premier organe de verrouillage 102 et une deuxième liaison pivot 120, 122 avec l'organe de verrouillage additionnel 104, 106 correspondant.

Avantageusement chaque première liaison pivot 116, 118 est formée par une saillie axiale s'étendant selon la direction verticale depuis le premier organe de verrouillage 102 et un trou, de préférence oblong, formé dans le bras correspondant.

Avantageusement chaque deuxième liaison pivot 120, 122 est formée par une saillie axiale s'étendant selon la direction verticale depuis l'organe de verrouillage additionnel 104, 106 correspondant et un trou formé dans le bras correspondant.

Pour chaque bras 109, 110, la première 116, 118 et la deuxième 120, 122 liaisons pivots sont positionnées à des extrémités opposées du bras 109, 110 correspondant.

Pour chaque bras 109, 110, la première 116, 118 et la deuxième 120, 122 liaisons pivots définissent respectivement un premier et un deuxième axes de rotation sensiblement parallèles et s'étendant selon la direction sensiblement verticale .

Chaque bras 109, 110 comprend une liaison pivot additionnelle 124, 126 avec le corps principal 58 et notamment la paroi inférieure 71. La liaison pivot additionnelle 124, 126 est positionnée entre la première 116, 118 et la deuxième 120, 122 liaisons pivots.

La liaison pivot additionnelle 124, 126 assure la fixation du bras 109, 110 correspondant à l'élément de mélange 34 et notamment au corps principal 58.

Chaque liaison pivot additionnelle 124, 126 est par exemple formée par un axe d'articulation, non représenté, s'étendant depuis une partie supérieure du corps principal 58 et traversant un orifice correspondant formé à travers le bras 109, 110 et pénétrant dans un logement formé sur une face interne de la paroi inférieure 71.

Avantageusement le corps principal 58 et notamment la paroi inférieure 71 comprend des butées propres à limiter le déplacement des organes de verrouillage 102, 104, 106 entre les positions de verrouillage et de déverrouillage et à définir ainsi les positions de verrouillage et de déverrouillage.

Le fonctionnement du dispositif de moussage 30 et notamment du système de fixation 70 pour réaliser une boisson à base de lait moussé sera expliqué ci-dessous à l'aide des figures.

Dans une première étape le réservoir 32, l'élément de mélange 34 et le tube d'alimentation en lait 35 sont fournis à un utilisateur.

Dans une étape suivante, l'utilisateur connecte le tube d'alimentation en lait 35 au corps principal 58 puis assemble l'organe de recouvrement 60 avec le corps principal 58.

Ensuite, lors d'une étape de montage l'utilisateur positionne l'élément de mélange 34 sur le réservoir 32, en installant le tube d'alimentation en lait 35 dans le volume interne. Au cours de l'étape de montage, le corps principal 58 est positionné au niveau de l'ouverture 36 et translate vers le bas par rapport au réservoir 32. Les chanfreins 107, 112, 113 viennent alors en appui contre une face interne de la paroi circonférentielle 40 de sorte que les organes de verrouillage 102, 104, 106 sont déplacés de la position de verrouillage vers la position de déverrouillage. Puis à la fin du mouvement de translation les organes de verrouillage 102, 104, 106 sont positionnés en regard des logements de fixation 42, 46, 48 correspondants et sont alors déplacés de la position de déverrouillage vers la position de verrouillage sous l'effet de l'organe de rappel 108 de sorte à être positionnés au travers des logements de fixation 42, 46, 48.

A la suite de l'étape de montage, l'utilisateur est apte à connecter le dispositif de moussage à la machine à café 10 et notamment l'organe de connexion 56 à l'embout de sortie d'eau chaude/vapeur 26 de sorte à réaliser des boissons à base de lait moussé, le lait moussé étant délivré via l'organe de distribution de lait moussé 52.

Lors de la réalisation de la boisson l'utilisateur peut vérifier le bon fonctionnement du dispositif de moussage 30 via la fenêtre de visualisation 96 et régler le débit d'air délivrer dans le canal d'admission d'air 92 à l'aide du dispositif de réglage de débit d'air 99.

Une fois la boisson à base de lait moussé réalisée, l'utilisateur déconnecte l'organe de connexion 56 de l'embout de sortie d'eau chaude/vapeur 26.

Ensuite, lors d'une étape de démontage, l'utilisateur exerce sur la surface d'appui 102A du premier organe de verrouillage 102 un effort opposé à l'effort de rappel de sorte à déplacer les organes de verrouillage 102, 104, 106 de la position de verrouillage à la position de déverrouillage. Lors de l'étape de démontage les organes de verrouillage 102, 104, 106 sont alors extraits des logements de fixation 42, 46, 48. Puis l'utilisateur exerce un mouvement de translation vers le haut de l'élément de mélange et les organes de verrouillage sont alors maintenu en position de déverrouillage car en contact avec la face interne de la paroi circonférentielle 40.

A la fin de l'étape de démontage l'élément de mélange 34 est séparé du réservoir 32 et ceci a été possible via un simple appui sur le premier organe de verrouillage 102 et un mouvement de translation.

Ensuite l'utilisateur sépare l'organe de recouvrement 60 du corps principal 58 et est apte à placer les différents éléments au lave-vaisselle pour une opération de nettoyage.

Grâce à l'invention l'ergonomie et la manipulation du dispositif de moussage de lait 30 sont simplifiées. En outre le nettoyage est facilité et la robustesse de la fixation des éléments composants le dispositif de moussage 30 est améliorée.

En variante, le système de fixation comprend un unique organe de verrouillage additionnel ou plus de deux organes de verrouillages additionnels.

Comme visible sur les figures, lors du déplacement du premier organe de verrouillage entre les positions de verrouillage et de déverrouillage, le premier organe de verrouillage 102 est mobile par rapport à chaque organe de verrouillage additionnel 104 , 106. En d'autres termes, lors du déplacement du premier organe de verrouillage entre les positions de verrouillage et de déverrouillage, le premier organe de verrouillage 102 est propre à se déplacer par rapport à chaque organe de verrouillage additionnel et notamment à se rapprocher ou s'éloigner de chaque organe de verrouillage additionnel.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Dispositif de moussage de lait (30) comportant :
- un réservoir (32) de lait comprenant une ouverture (36) ; et
- un élément de mélange (34), l'élément de mélange (34) étant propre à être fixé de manière amovible au réservoir (32) au niveau de l'ouverture (36) et comprenant un système de fixation (70) au réservoir, le système de fixation (70) comprenant un premier organe de verrouillage (102) mobile entre :
▪ une position de verrouillage dans laquelle le premier organe de verrouillage (102) est propre à être reçu dans un premier logement de fixation (42) formé sur le réservoir (32), et
▪ une position de déverrouillage dans laquelle le premier organe de verrouillage (102) est propre à être extrait du premier logement de fixation (42),
**caractérisé en ce que** le système de fixation (70) comprend également au moins un organe de verrouillage additionnel (104, 106) propre à coopérer avec un logement de fixation additionnel (46, 48) respectif formé sur le réservoir (32).

2. Dispositif de moussage de lait (30) selon la revendication 1, **caractérisé en ce que** lors du déplacement du premier organe de verrouillage (102) entre les positions de verrouillage et de déverrouillage, le premier organe de verrouillage (102) est mobile par rapport à chaque organe de verrouillage additionnel (104, 106).

3. Dispositif de moussage de lait (30) selon la revendication 1 ou 2, **caractérisé en ce que** le réservoir s'étend sensiblement selon un axe central (X) qui est sensiblement vertical en situation d'usage du dispositif de moussage de lait, et **en ce que** le déplacement du premier organe de verrouillage (102) de la position de verrouillage vers la position de déverrouillage s'effectue selon une direction de déplacement, sensiblement perpendiculaire à l'axe central (X), s'étendant du premier organe de verrouillage (102) vers chaque organe de verrouillage additionnel (104, 106) de sorte à réduire la distance entre le premier organe de verrouillage (102) et chaque organe de verrouillage additionnel (104, 106).

4. Dispositif de moussage de lait (30) selon l'une quelconque des revendications précédentes, **caractérisé en ce que** chaque organe de verrouillage additionnel (104, 106) est associé mécaniquement au premier organe de verrouillage (102) de sorte que le déplacement du premier organe de verrouillage (102) entre les positions de verrouillage et de déverrouillage entraine un déplacement correspondant de chaque organe de verrouillage additionnel (104, 106) entre :
- une position de verrouillage dans laquelle l'organe de verrouillage additionnel (104, 106) est propre à être reçu dans le logement de fixation additionnel (46, 48) respectif, et
- une position de déverrouillage dans laquelle l'organe de verrouillage additionnel (104, 106) est propre à être extrait du logement de fixation additionnel (46, 48) respectif.

5. Dispositif de moussage de lait (30) selon la revendication 4, **caractérisé en ce que** le système de fixation (70) comprend pour chaque organe de verrouillage additionnel (104, 106) un bras (109, 110) mobile en rotation par rapport au premier organe de verrouillage (102) lors de son déplacement entre les positions de verrouillage et de déverrouillage, chaque bras (109, 110) étant propre lors de sa rotation à entrainer en translation l'organe de verrouillage additionnel (104, 106) correspondant pour le déplacer entre la position de verrouillage et la position de déverrouillage.

6. Dispositif de moussage de lait (30) selon la revendication 5, **caractérisé en ce que** le déplacement du premier organe de verrouillage (102) de la position de verrouillage vers la position de déverrouillage s'effectue selon une direction de déplacement s'étendant du premier organe de verrouillage (102) vers les organes de verrouillages additionnels (104, 106) de sorte à réduire la distance entre le premier organe de verrouillage (102) et chaque organe de verrouillage additionnel (104, 106) et **en ce que** lors du déplacement du premier organe de verrouillage (102) de la position de verrouillage vers la position de déverrouillage chaque bras (109, 110) est propre à déplacer l'organe de verrouillage additionnel (104, 106) correspondant en direction du premier organe de verrouillage (102).

7. Dispositif de moussage de lait (30) selon la revendication 5 ou 6, **caractérisé en ce que** chaque bras (109, 110) comprend une première liaison pivot (116, 118) avec le premier organe de verrouillage (102) et une deuxième liaison pivot (120, 122) avec l'organe de verrouillage additionnel (104, 106) correspondant, la première et la deuxième liaisons pivots étant positionnées à des extrémités opposées du bras (109, 110) correspondant.

8. Dispositif de moussage de lait (30) selon la revendication 7, **caractérisé en ce que** pour chaque bras (109, 110) la première (116, 118) et la deuxième (120, 122) liaisons pivots définissent respectivement un premier et un deuxième axes de rotation sensiblement parallèles et s'étendant selon une direction sensiblement verticale.

9. Dispositif de moussage de lait (30) selon la revendication 7 ou 8, **caractérisé en ce que** l'élément de mélange (34) comprend un corps principal (58) et **en ce que** chaque bras (109, 110) comprend une liaison pivot additionnelle (124, 126) avec le corps principal (58), la liaison pivot additionnelle étant positionnée entre la première (116, 118) et la deuxième (120, 122) liaisons pivots.

10. Dispositif de moussage de lait (30) selon l'une quelconque des revendications précédentes, **caractérisé en ce que** l'élément de mélange (34) comprend un corps principal (58) et **en ce que** le corps principal (58) comprend pour chaque organe de verrouillage additionnel (104, 106) un relief additionnel (114, 115) propre à former une liaison glissière avec l'organe de verrouillage additionnel (104, 106).

11. Dispositif de moussage de lait (30) selon l'une quelconque des revendications précédentes, **caractérisé en ce que** le premier organe de verrouillage (102) définit une surface d'appui (102A) sur laquelle un effort est propre à être exercé pour déplacer le premier organe de verrouillage (102) de sa position de verrouillage vers sa position de déverrouillage, et **en ce qu'**un organe de rappel (108) en position de verrouillage est associé au premier organe de verrouillage (102).

12. Dispositif de moussage de lait (30) selon l'une quelconque des revendications précédentes, **caractérisé en ce que** le premier organe de verrouillage (102) est muni d'un bord incliné formant un chanfrein (107) propre à coopérer avec un bord supérieur de l'ouverture (36) lors du montage de l'élément de mélange (34) sur le réservoir (32) pour déplacer le premier organe de verrouillage (102) vers la position de déverrouillage, et **en ce que** chaque organe de verrouillage additionnel (104, 106) est muni d'un bord incliné formant un chanfrein (112, 113) propre à coopérer avec un bord supérieur de l'ouverture (36) lors du montage de l'élément de mélange (34) sur le réservoir (32) pour déplacer chaque organe de verrouillage additionnel (104, 106) vers la position de déverrouillage.

13. Dispositif de moussage de lait (30) selon l'une quelconque des revendications précédentes, **caractérisé en ce que** l'élément de mélange (34) comprend :
+ une partie de mélange (62) ; et
+ un orifice d'entrée d'eau chaude/vapeur (64) et un conduit d'écoulement principal (66) reliant l'orifice d'entrée d'eau chaude/vapeur (64) à la partie de mélange (62).

14. Dispositif de moussage de lait (30) selon la revendication précédente, **caractérisé en ce que** l'élément de mélange (34) comprend :
- un corps principal (58) comprenant la partie de mélange (62), l'orifice d'entrée d'eau chaude/vapeur (64), le conduit d'écoulement principal (66) et un conduit d'amenée de lait (90) relié au conduit d'écoulement principal (66), et
- un organe de recouvrement (60) du corps principal (58) mobile par rapport au corps principal (58) entre une position de fermeture dans laquelle l'organe de recouvrement (60) ferme et/ou recouvre la partie de mélange (62) et le conduit d'écoulement principal (66) et une position d'ouverture dans laquelle la partie de mélange (62) et le conduit d'écoulement principal (66) sont ouverts et accessibles pour autoriser un nettoyage de la partie de mélange (62) et du conduit d'écoulement principal (66).

15. Machine de distribution de boisson (10) comprenant un embout de sortie d'eau chaude/vapeur (26) et un dispositif de moussage de lait (30) propre à être connecté à l'embout de sortie d'eau chaude/vapeur (26), **caractérisée en ce que** le dispositif de moussage de lait (30) est selon l'une quelconque des revendications précédentes.
